**Europäisches Patentamt**

**European Patent Office**

**Office européen des brevets**

(19)

(11) Veröffentlichungsnummer : **0 111 092 B2**

(12) # NEUE EUROPÄISCHE PATENTSCHRIFT

(45) Veröffentlichungstag der neuen Patentschrift :
**25.11.92 Patentblatt 92/48**

(51) Int. Cl.⁵ : **F16D 11/00**, B23Q 16/08

(21) Anmeldenummer : 83110076.3

(22) Anmeldetag : 08.10.83

(54) **Kupplungsvorrichtung.**

(30) Priorität : **18.10.82 CH 6055/82**
**18.08.83 CH 4507/83**

(43) Veröffentlichungstag der Anmeldung :
**20.06.84 Patentblatt 84/25**

(45) Bekanntmachung des Hinweises auf die
Patenterteilung :
**20.05.87 Patentblatt 87/21**

(45) Bekanntmachung des Hinweises auf die
Entscheidung über den Einspruch :
**25.11.92 Patentblatt 92/48**

(84) Benannte Vertragsstaaten :
**AT BE CH DE FR GB IT LI LU NL SE**

(56) Entgegenhaltungen :
**EP-A- 403 428**
**CH-A- 563 212**
**DE-A- 1 477 837**
**DE-A- 2 512 227**
**DE-A- 3 003 756**
**DE-B- 1 257 496**
**DE-C- 723 191**
**DE-C- 760 364**
**DE-C- 2 646 951**
**DE-U- 8 121 260**

(56) Entgegenhaltungen :
**DE-U-18 227 49**
**FR-A- 970 101**
**FR-A- 1 047 207**
**FR-A- 1 133 642**
**GB-A- 1 094 067**
**JP-U-51 114 550**
**US-A- 3 213 722**
**US-A- 4 245 144**
**LUEGER, Lexikon der Technik, Grundlagen
des Maschinenbaus, 1960, Seiten 419 und 420.
Vorrichtungen II, Heinrich Mauri, Berlin-Hei-
delberg-New York 1981, S. 41.
ITS - Das integrierte Spannsystem, Erowa-
Swiss 1013 d/3000/5.90
ITS - Erowa-Swiss Präzision-Palettensystem
1013 d/3000/7.90
EROWA-Magazin, Das ITS-Spannsystem, 1010
d/4000/7.90**

(73) Patentinhaber : **Erowa AG
Winkelstrasse 8
CH-5734 Reinach (CH)**

(72) Erfinder : **Schneider, Rudolf
Gondiswinkel
CH-5734 Reinach (CH)**

(74) Vertreter : **Rottmann, Maximilian R.
c/o Rottmann + Quehl AG Glattalstrasse 37
CH-8052 Zürich (CH)**

EP 0 111 092 B2

## Beschreibung

Die vorliegende Erfindung bezieht sich auf eine Kupplungsvorrichtung zur drehfesten und auswechselbaren Verbindung eines Werkstückes mit einer Bearbeitungseinrichtung. Beim Verbinden eines Werkstückes mit einer Bearbeitungseinrichtung, z.B.einer Drehbank, einer Fräsmaschine, einer Schleifeinrichtung oder dgl. stellt sich die Forderung, dass das zu bearbeitende Werkstück in bezug auf eine Achse der Bearbeitungseinrichtung genau definiert eingespannt werden kann. Bei einer Drehbank z.B. ist dies die Rotationsachse des Spannfutters, wobei die Winkellage des Werkstückes gegenüber dieser Rotationsachse keine Bedeutung besitzt. An die Zentrizität hingegen werden hohe Anforderungen gestellt. Im Falle einer Schleif- oder Fräseinrichtung spielt nicht nur die Zentrizität eine Rolle, sondern es muss auch auf eine winkelgerechte Lage des Werkstückes bezüglich der Bearbeitungseinrichtung geachtet werden.

Im Präzisionswerkzeugbau werden ausserordentlich hohe Anforderungen an die Bearbeitungsgenauigkeit eines Werkstückes gestellt. Inbesondere muss gewährleistet sein, dass ein zu bearbeitendes Werkstück in genau definierter Lage in eine Bearbeitungseinrichtung eingespannt werden kann.

Kleine Toleranzen in Bezug auf Exzentrizität lassen sich mit den bekannten Konussitzen erzielen. Diese gewährleisten eine zwangläufige Zentrierung mit sehr hoher Genauigkeit, sind andererseits jedoch anfällig gegen Verschmutzung. Ein verunreinigter Konussitz ist entweder in seiner Genauigkeit beeinträchtigt oder er lässt sich in Folge übermässiger Selbsthemmung nicht oder fast nicht mehr lösen. Ausserdem ist die Forderung nach einer winkelgerechten Einspannung des Werkzeuges bei einem Konussitz nicht erfüllt.

Entsprechendes lässt sich für die gebräuchlichen Spannfutter sagen; auch diese sind anfällig gegen Verschmutzung und bieten keine Lösung für eine winkelgerechte Einspannung eines Werkstückes.

Bei hohen Anforderungen an die Zentrizität der Einspannung ist es ausserdem erforderlich, die Einspannmittel, - sei es ein Konussitz, sei es ein Spannfutter -, mit ausserordentlich hoher Präzision zu fertigen. Dies ist natürlich mit einem hohen Aufwand verbunden und treibt die Kosten in die Höhe, besonders wenn eine grosse Anzahl solcher Einspannvorrichtungen benötigt werden.

Ein Problem schliesslich, das bisher noch kaum zufriedenstellend gelöst werden konnte, besteht darin, ein Werkstück nacheinander in eine Anzahl verschiedener Bearbeitungseinrichtungen einzuspannen, um eine Mehrzahl von Bearbeitungsvorgängen am selben Werkstück auszuführen, wobei eine absolut zentrische und winkelgenaue Einspannung des Werkstückes in jeder der Bearbeitungseinrichtungen gewährleistet ist. Diese Forderung tritt beispielsweise bei der Herstellung von Elektrodenkörpern für Erodiermaschinen auf, die im allgemeinen eine Vielzahl von Bearbeitungsvorgängen auf verschiedenen Bearbeitungseinrichtungen erfordert. Die Anforderungen an die Massgenauigkeit liegen dabei in der Grössenordnung von wenigen 1000stel Millimetern, und die Werkstücke sollen möglichst schnell und einfach von einer Bearbeitungsstation zur nächsten verlegt werden können.

Aus der DE-B-12 57 496 ist zwar eine Kupplungsvorrichtung bekannt, die zwei koaxiale Kupplungsorgane und eine dazwischengefügte, in Umfangsrichtung starre Mitnehmerscheibe aufweist, wobei das eine Kupplungsorgan mit zwei von der Kupplungsfläche abstehenden Mitnehmerzapfen versehen ist und wobei die Mantelfläche der Mitnehmerzapfen konisch ausgebildet ist. Diese Kupplungsvorrichtung eignet sich aber für den erfindungsgemässen Zweck, d.h. zur Lösung der vorstehend geschilderten Probleme in keiner Weise, da sie die Beforderte Zentrizität der Verbindung nicht gewährleisten und schon von der Aufgabenstellung her der Forderung einer leicht lösbaren Verbindung unter Gewährleistung einer hohen Repetiergenauigkeit beim Wiederherstellen der Verbindung nicht gerecht werden kann.

Es ist die Aufgabe der vorliegenden Erfindung, eine Kupplungsvorrichtung zur drehfesten und auswechselbaren Verbindung eines Werhstückes mit einer Bearbeitungs vorrichtung zu schaffen, welche einerseits die vorstehend geschilderten Nachteile nicht mehr aufweist und andererseits, zusätzlich zu einer hochpräzisen zentrischen Einspannung, eine genau definierte Winkellage des Werkstückes in Bezug auf die Bearbeitungseinrichtung gewährleistet, insbesondere auch dann, wenn die Verbindung oft gelöst und wiederhergestellt wird. Ferner soll auch erreicht werden, dass ein eingespanntes Werkstück rasch von einer Bearbeitungseinrichtung gelöst und an eine nachfolgende Bearbeitungseinrichtung angeschlossen werden kann, wobei eine weitgehende Unempfindlichkeit gegen Verschmutzung gewahrt werden soll. Diese Aufgabe wird durch die Kupplungsvorrichtung gemäß Anspruch 1 gelöst.

Bevorzugte Ausführungsformen der erfindungsgemässen Vorrichtung sind in den Ansprüchen 2 - 16 definiert.

Im folgenden soll näher auf ein Ausführungsbeispiel der Kupplungsvorrichtung gemäss der vorliegenden Erfindung eingegangen werden, wobei auf die beiliegenden Zeichnungen Bezug genommen wird. Es zeigen:

Fig. 1 einen Axialschnitt durch die Kupplungsvorrichtung in entspanntem Zustand,

Fig.2 einen Axialschnitt durch die Kupplungsvorrichtung in gespanntem Zustand,

Fig.3 einen Teilschnitt entlang der Linie A-A in Fig. 1,

Fig. 4 einen Teilschnitt entlang der Linie B-B in Fig. 2,

Fig. 5 eine Ansicht des einen Kupplungsorganes mit aufgesetzter Mitnehmerscheibe,

Fig. 6 eine Ansicht des anderen Kupplungsorganes,

Fig. 7 einen Schnitt entlang der Linie C-C in Fig. 6,

und

Fig. 8 einen Teilschnitt entlang der Linie D-D in Fig. 6.

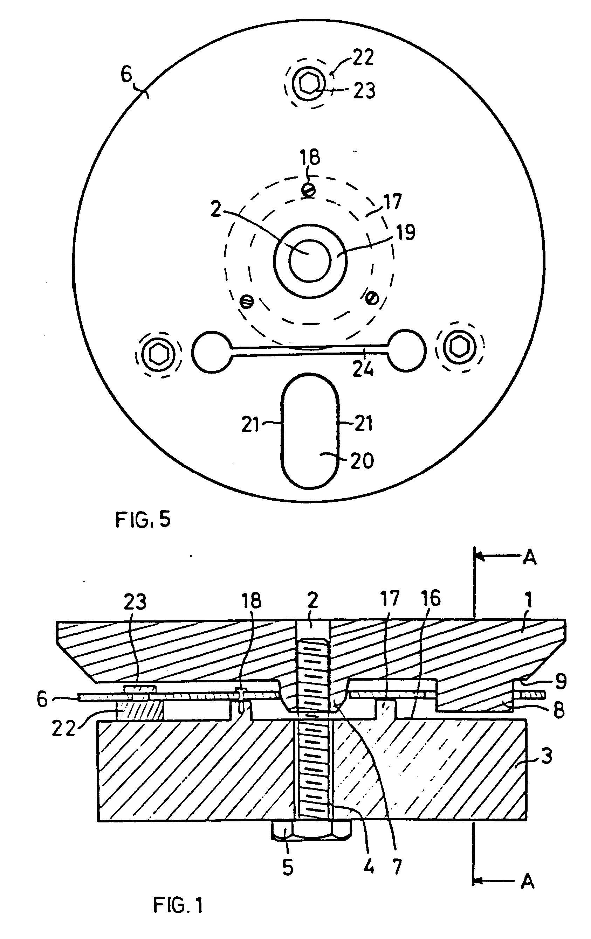

In Fig. 1 ist die erfindungsgemässe Kupplungsvorrichtung in entspanntem Zustand im Schnitt dargestellt. Sie umfasst ein erstes Kupplungsorgan 1, welches im wesentlichen tellerförmige Gestalt besitzt und mit einer zentralen Gewindebohrung 2 versehen ist. Ferner ist ein zweites Kupplungsorgan 3 vorgesehen, welches ebenfalls im wesentlichen tellerförmige Gestalt aufweist und mit einer zentralen Durchgangsbohrung 4 versehen ist. Diese wird von einer Schraube 5 durchgriffen, deren freies Ende in das Gewinde der Bohrung 2 eingreift. Durch Anziehen der Schraube 5 werden die beiden Kupplungsorgane 1 und 3 in axialer Richtung zusammengezogen. Bei dem in Fig. 1 dargestellten Zustand ist die Schraube 5 nicht angezogen und die beiden Kupplungsorgane 1 und 3 liegen nur lose aufeinander auf.

Zwischen den beiden Kupplungsorganen 1 und 3 ist eine Mitnehmerscheibe 6 eingefügt. Diese ist mit dem Kupplungsorgan 3 drehfest verbunden. Das Kupplungsorgan 1 ist durch nicht näher dargestellte Mittel an eine Bearbeitungseinrichtung angekoppelt, z.B. an die Spindel einer Drehbank, einer Schleifmaschine oder dgl. Das andere Kupplungsorgan 3 hingegen trägt, unter Zuhilfenahme von ebenfalls nicht dargestellten Hilfsmitteln, das zu bearbeitende Werkstück. Bei gespannter Kupplungsvorrichtung wirkt somit das Kupplungsorgan 1 als Antriebsglied, das Kupplungsorgan 3 hingegen als Abtriebsglied.

Wie weiter aus Fig. 1 und insbesondere auch aus Fig. 6 bis 8 zu entnehmen ist, ist das Kupplungorgan 1 einerseits mit einem zentrisch angeordneten Mitnehmerzapfen 7 sowie einem exzentrisch angeordnetem Mitnehmerzapfen 8 versehen. Der zentrische Zapfen 7 und der exzentrische Mitnehmerzapfen 8 ragven über die Kupplungsfläche 9 des Kupplungsorganes 1 hinaus. Die Aussenfläche des zentrisch angeordenten Zapfens 7 ist konisch ausgebildet und gliedert sich in zwei Abschnitte, nämlich einen ersten kegelstumpfmantelförmigen Abschnitt 10, der dem Kupplungsorgan 1 zugewandt ist, und einen zweiten kegelstumpfmantelförmigen Abschnitt 11, der der Stirnfläche 12 des Zapfens 7 zugewandt ist. Im Schnitt gemäss Fig. 7 gesehen beträgt die Neigung des ersten Abschnittes 10 weniger als diejenige des zweiten Abschnittes 11. Mit anderen Worten heisst dies, dass der an die Stirnfläche 12 anschliessende Abschnitt 11 eine grössere Konizität aufweist als der nachfolgende, an die Oberfläche 9 des Kupplungsorganes 1 anschliessende Abschnitt 10. Der Zweck dieser Unterteilung wird im folgenden noch näher erläutert werden.

Der Mitnehmerzapfen 8, der exzentrisch zur Drehachse v des Kupplungsorganes 1 angeordnet ist, besitzt zwei radiusparallel verlaufende Seitenflächen 13, die gegenüber der Drehachse v des Kupplungsorganes 1 geneigt verlaufen. Im Bereich der Stirnfläche 14 des Mitnehmerzapfens 8 gehen diese geneigten Flächen 13 in zwei weitere, gegenüber der Drehachse v stärker geneigte Flächen 15 über, die ebenfalls radiusparallel verlaufen.

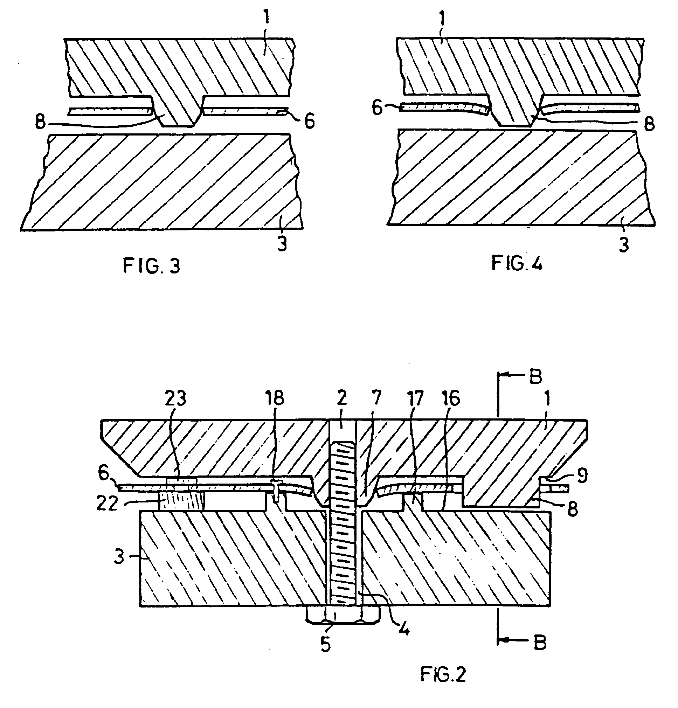

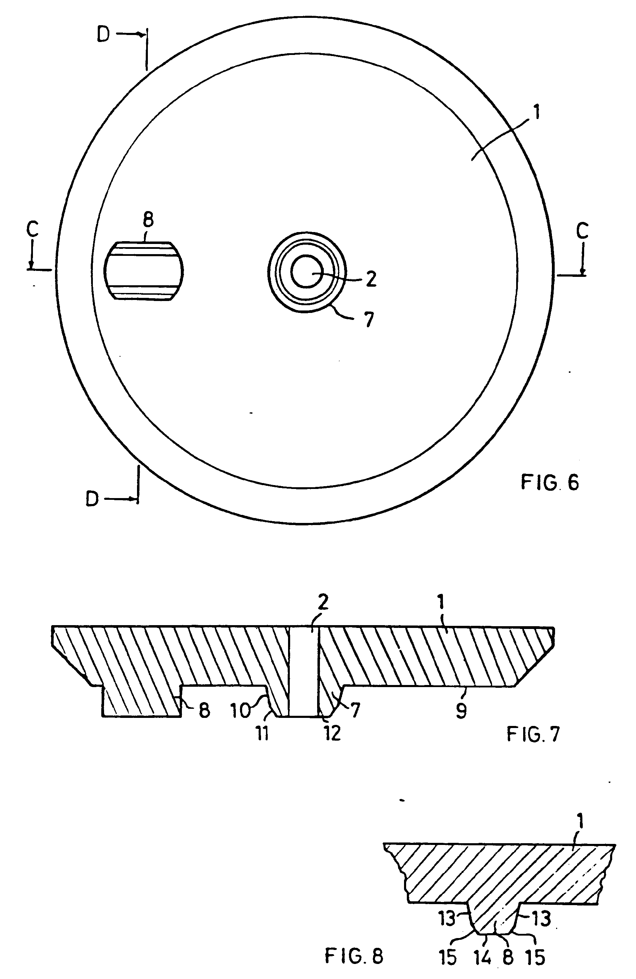

Das zweite Kupplungsorgan 3 besitzt einen ringförmigen, konzentrisch zur Bohrung 4 angeordneten über die Kupplungsfläche 16 vorstehenden, ringförmigen Wulst 17, auf dessen Stirnfläche die Mitnehmerscheibe 6 aufliegt. Sie ist mit Schrauben 18 drehfest mit dem Wulst 17 verbunden und befindet sich in einem gewissen Abstand zur Oberfläche 16 des Kupplungsorganes 3. Wie insbesondere aus der Fig. 5 ersichtlich ist, besitzt die Mitnehmerscheibe 6 einerseits eine zentrale, kreisrunde Öffnung 19 und andererseits eine exzentrisch angeordnete, im wesentlichen ovale Öffnung 20. Letztere weist zwei parallele Seitenkanten 21 auf, die radiusparallel zur Drehachse v der Kupplungsvorrichtung verlaufen. Aus der Fig. 1 kann entnommen werden, dass der Durchmesser der zentralen Öffnung 19 so bemessen ist, dass deren Kante den kegelstumpfmantelförmigen Bereich 10 des Kupplungsorganes 1 teilweise umgreift. Die beiden parallelen Kanten 21 der Öffnung 20 hingegen sind in einem solchen Abstand zueinander angeordnet, dass sie die geneigten, ebenen Seitenflächen 13 des Mitnehmerzapfens 8 teilweise übergreifen wie aus Fig. 3 ersichtlich ist. Es ist leicht einzusehen, dass auf diese Weise der Zapfen 7 in Zusammenwirkung mit der Öffnung 19 für eine Zentrierung des Kupplungsorganes 3 gegenüber dem Kupplungsorgan 1 sorgt, während v der Zapfen 8 in Zusammenarbeit mit der Öffnung 20 für die Winkellage des Kupplungsorganes 1 gegenüber dem Kupplungsorgan 3 verantwortlich ist.

Das Kupplungsorgan 3 ist mit Abstandszapfen 22 ausgerüstet, deren Oberflächen 23 über die Kupplungsfläche 16 des Kupplungsorganes 3 vorstehen und die bei gespannter Kupplungsvorrichtung auf der Oberfläche 9 des Kupplungsorganes 1 zur Auflage kommen. Dies gewährleistet, dass die beiden Kupplungsorgane 1 und 3 bei gespannter Kupplungsvorrichtung exakt parallel zueinander liegen.

Dieser Zustand ist in Fig. 2 im Schnitt dargestellt. Die angestrebte dreidimensionale Positionierung der beiden Kupplungsorgane 1 und 3 zueinander wird dabei wie folgt erreicht:

- Der gegenseitige Abstand der beiden Kupplungsorgane 1 und 3 sowie deren Paralellität wird durch das Aufliegen der Oberflächen 23 der Abstandszapfen 22 auf der Kupplungsfläche 9 des Kupplungsorganes 1 definiert;

- die Konzentrizität der beiden Kupplungsorgane 1 und 3 wird durch den Eingriff des Zapfens 7 in die Öffnung 19 der Mitnehmerscheibe 6 sichergestellt. Wie schon erwähnt, übergreifen die Kanten der Öffnung 19 die konische Mantelfläche 10 des Zapfens 7 in lose aufgesetzter Position zum Teil. Beim Spannen der Kupplungsvorrichtung, wie in Fig.2 dargestellt, liegen die Kanten der Öffnung 19 der Mitnehmerscheibe 6 an der Mantelfläche 10 auf, sodass sich die Mitnehmerscheibe 6 im Bereich ihrer Öffnung 19 deformiert. Gleichzeitig ergibt sich ein Selbsteinigungseffekt der Oberfläche des Zapfens 7.

- Die Winkellage des Kupplungsorganes 3 gegenüber dem Kupplungsorgan 1 wird durch das Anliegen der Kanten 21 der Öffnung 20 in der Mitnehmerscheibe an den konischen Seitenflächen 13 des Zapfens 8 definiert. Auch hier ergibt sich bei gespanntem Zustand der Kupplungsvorrichtung, wie in Fig.2 dargestellt, eine Deformation der Mitnehmerscheibe 6 und damit ein zwangläufiges Anpressen der Kanten 21 an die Flächen 13 mit Selbstreinigungseffekt.

Die stärker abgeschrägten Randbereiche, d.h. die Bereiche 11 des zentrischen Zapfens 7 sowie die Bereiche 15 des Zapfens 8, erleichtern das Aufsetzen des mit dem zu bearbeitenden Werkstück versehenen Kupplungsorganes 3 auf das Kupplungsorgan 1. Für die Funktion der Kupplungsvorrichtung an sich haben sie keine Bedeutung, es sei denn, dass die Grössentoleranz der Öffnungen 19 und 20 an der alleruntersten Grenze liegen, sodass die Kanten dieser Öffnungen auf die besagten Randbereiche 11 und 15 der beiden Zapfen zu liegen kommen,

Wie aus der Fig. 5 ersichtlich ist, besitzt die Mitnehmerscheibe 6 einen Schlitz 24, der senkrecht zur Verbindungslinie zwischen zentraler Öffnung 19 und exzentrischer Öffnung 20 verläuft. Dieser Schlitz 24 gewährleistet, dass sich der zentrale Bereich der Mitnehmerscheibe 6, um die zentrale Öffnung 19 herum, unabhängig vom Randbereich um die Öffnung 20 herum elastisch verformen kann. Damit ist eine hochpräzise, genau definierte Lage des Kupplungsorganes 3 gegenüber dem Kupplungsorgan 1 sowohl in bezug auf die Zentrizität als auch in bezug auf die Winkelgenauigkeit erreicht.

Der Vorteil der erfindungsgemäss vorgeschlagenen Kupplungsvorrichtung ist insbesondere darin zu sehen, dass nur das Kupplungsorgan 1 mit den vorstehenden Zapfen 7 und 8 präzise bearbeitet werden muss. Das andere Kupplungsorgan 3 mit aufgesetzter Mitnehmerscheibe kann relativ grosse Fertigungstoleranzen aufweisen, ohne dass Abstriche in der Zentrier- und Winkelgenauigkeit in Kauf zu nehmen wären, solange die zentrale Öffnung 19 genau rund ist und die beiden Kanten 21 der exzentrischen Öffnung 20 genau parallel sind. Dies lässt sich jedoch mit kleinem Aufwand erreichen, umso mehr, als das absolute Mass des Durchmessers der zentralen Öffnung 19 wie auch dasjenige des Abstands der beiden Kanten 21 von untergeordneter Bedeutung sind.

## Patentansprüche

1. Kupplungsvorrichtung zur drehfesten und auswechselbaren Verbindung eines Werkstückes mit einer Bearbeitungseinrichtung mit zwei koaxialen Kupplungsorganen (1, 3) und einer dazwischengefügten, im Umfangsrichtung starren Mitnehmerscheine (6), wobei das eine Kupplungsorgan (1) an der Bearbeitungseinrichtung befestigt ist und mit wenigstens zwei von der Kupplungsfläche abstehenden Mitnehmerzapfen (7, 8) versehen ist, wobei die Mantelfläche der Mitnehmerzapfen (7, 8) zumindest teilweise konisch ausgebildet ist, wobei das andere Kupplungsorgan (3) das Werkstück trägt, und beim Werkstückwechsel zusammen mit diesem von dem einen Kupplungsorgan (1) lösbar ist, und wobei Mittel (2, 5) vorgesehen sind, die die beiden Kupplungsorgane (1, 3) in axialer Richtung lösbar gegeneinander verspannen, wobei ferner die Mitnehmerscheibe (6) aus Federstahl besteht und im Abstand von der Kupplungsfläche (16) des anderen Kupplungsorgans (3) drehfest mit diesem verbunden und mit Öffnungen (19, 20) versehen ist, die korrespondierend zu den Mitnehmerzapfen (7,8) angeordnet sind und deren Kanten (21) die konischen Mantelflächen (10, 13) der Mitnehmerzapfen zumindest teilweise derart übergreifen, dass die Federstahlscheibe (6) in gespanntem Zustand der Kupplungsvorrichtung im Bereich der Öffnungen (19, 20) axial elastisch deformiert ist, und wobei eines (3) der beiden Kupplungsorgane (1,3) mit drei über die Kupplungsfläche (16) vorstehenden Abstandszapfen (22) versehen ist, deren Stirnflächen (23) beim Kupplungseingriff gegen die Kupplungsfläche (9) des anderen Kupplungsorganes (1) anfliegen.

2. Kupplungsvorrichtung nach Anspruch 1, dadurch gekennzeichnet, dass das erste Kupplungsorgan (1) mit einem zentrisch angeordneten (7) und einem exzentrisch angeordneten (8) Mitnehmerzapfen versehen ist.

3. Kupplungsvorrichtung nach Anspruch 2, dadurch gekennzeichnet, dass die Aussenfläche (10 bzw.11) des zentrischen Mitnehmerzapfens (7) zumindest teilweise die Gestalt eines Kegelstumpfmantels besitzt.

4. Kupplungsvorrichtung nach Anspruch 3, dadurch gekennzeichnet, dass die Aussenfläche des zentrischen Mitnehmerzapfens (7) in einem ersten, dem ersten Kupplungsorgan (1) zugewandten Basisabschnitt (10) die Gestalt eines ersten Kegelstumpfmantels und in einem zweiten, seiner Stirnfläche (12) zugewandten Abschnitt (11) die Gestalt eines zweiten Kegelstumpfmantels besitzt.

5. Kupplungsvorrichtung nach Anspruch 4, dadurch gekennzeichnet, dass der Öffnungswinkel des zugehörigen Kegels beim ersten Abschnitt (10) kleiner ist als derjenige des zugehörigen Kegels beim zweiten Abschnitt (11).

6. Kupplungsvorrichtung nach Anspruch 2, dadurch gekennzeichnet, dass der exzentrisch angeordnete Mitnehmerzapfen (8) zwei einander gegenüberliegende Oberflächenbereiche (13, 15) besitzt, die durch mindestens je eine radiusparallele, gegenüber der Achse der Kupplungsvorrichtung geneigte Ebene gebildet sind.

7. Kupplungsvorrichtung nach Anspruch 6, dadurch gekennzeichnet, dass jeder der beiden Oberflächenbereiche (13, 15) durch je zwei Ebenen (13 bzw.15) gebildet sind, die in unterschiedlichem Winkel zur Achse der Kupplungsvorrichtung geneigt sind.

8. Kupplungsvorrichtung nach Anspruch 7, dadurch gekennzeichnet, dass die der Stirnfläche (14) des Zapfens (8) zugewandte Ebene (15) gegenüber der Achse der Kupplungsvorrichtung stärker geneigt ist als die der Kupplungsfläche (9) des Kupplungsorgans zugewandte Ebene (15).

9. Kupplungsvorrichtung nach Anspruch 2, dadurch gekennzeichnet, dass die Mitnehmerscheibe (6) mit einer ersten, zentrisch angeordneten, kreisrunden Öffnung (19) und mit einer zweiten, exzentrisch angeordneten Öffnung (20) versehen ist, welch letztere zwei radiusparallel verlaufende Kanten (21) besitzt.

10. Kupplungsvorrichtung nach den Ansprüchen 1 - 5 und 9, dadurch gekennzeichnet, dass der Durchmesser der kreisrunden Öffnung (19) kleiner als der Basisdurchmesser des zentrischen Zapfens (7), jedoch grösser als sein Durchmesser an der Stirnfläche (12) ist.

11. Kupplungsvorrichtung nach Anspruch 10, dadurch gekennzeichnet, dass der Durchmesser der kreisrunden Öffnung (19) im Bereich zwischen dem maximalen und dem minimalen Durchmesser des der Kupplungsfläche (9) zugewandten, kegelstumpfförmigen Mantelabschnittes (10) des zentrischen Mitnehmerzapfens (7) liegt.

12. Kupplungsvorrichtung nach den Ansprüchen 1 - 2 und 6 - 9, dadurch gekennzeichnet, dass der Abstand der beiden radiusparallel verlaufenden Kanten (21) der exzentrischen Öffnung (20) kleiner als die Basisbreite des exzentrischen Zapfens (8), jedoch grösser als dessen Breite an der Stirnfläche (14) ist, jeweils senkrecht zum Radius gemessen.

13. Kupplungsvorrichtung nach Anspruch 12, dadurch gekennzeichnet, dass der Kantenabstand im Bereich zwischen Basisbreite und Breite des Zapfens (8) beim Übergang von der weniger geneigten (13) zur stärker geneigten (15) Ebene liegt.

14. Kupplungsvorrichtung nach Anspruch 2, dadurch gekennzeichnet, dass das zweite Kupplungsorgan (3) mit einem ringförmigen, konzentrischen, über die Kupplungsfläche (16) vorstehenden Wulst (17) versehen ist, an dessen Stirnfläche die Mitnehmerscheibe (6) drehfest angebracht ist.

15. Kupplungsvorrichtung nach Anspruch 1, dadurch gekennzeichnet, dass die Mitnehmerscheibe (6) mit zwischen den Öffnungen (19, 20) liegenden Schlitzen (24) versehen ist.

16. Kupplungsvorrichtung nach Ansprüchen 9 und 15, dadurch gekennzeichnet, dass zwischen der zentrischen und der exzentrischen Öffnung (19, 20) ein senkrecht zur Verbindungslinie der beiden Öffnungen (19, 20) verlaufender Schlitz (24) vorgesehen ist.

**Claims**

1. Coupling device for the torsionally fixed and exchangeable connection of a workpiece to a machining apparatus, with two coaxial coupling members (1,3) and an intermediate, in peripheral direction rigid driving plate (6), whereby the one coupling member (1) is secured to the machining apparatus and is provided with at least two driving pins (7,8) protruding from the coupling surface whereby the jacket surface of the driving pins (7,8) is at least partially conically shaped, whereby the other coupling member (3) carries the workpiece and is releasable from the one coupling member (1) together therewith during changing of the workpiece, and wherein means (2,5) are provided which releasably pull the two coupling members (1,3) together in the axial direction, in which further the driving plate (6) consists of spring steel and is torsionally fixed to the other coupling member (3) in a distance from the coupling surface of the other coupling member (3) and is provided with openings (19,20), which are arranged correspondingly to the driving pins (7,8) and the edges (21) thereof at least partially encompass the conical jacket surfaces (10,13) of the driving pins, that the spring steel disc (6) is elastically deformed axially in the region of the openings (19,20) when the coupling device is in tensioned condition, and in which one (3) of the coupling members (1,3) is provided with three distance pins (22) protruding from the coupling surface (16), the front faces (23) of which abut against the coupling surface (9) of the other coupling member (1) upon engaging the coupling device.

2.     Coupling device according to claim 1, characterised in that the first coupling member (1) is equipped with a centrically arranged (7) and an eccentrically arranged (8) driving pin.

3.     Coupling device according to claim 2, characterised in that the outer surface (10 and 11, resp.) of the centric driving pin (7) at least partially has the shape of the jacket of a truncated cone.

4.     Coupling device according to claim 3, characterised in that the outer surface of the centric driving pin (7) has the shape of the jacket of a first truncated cone in a first base portion (10) adjacent to the coupling member (1), and the shape of the jacket of a second truncated zone in a second portion (11) adjacent to its front face (12).

5.     Coupling device according to claim 4, characterised in that the aperture angle of the related cone is less in the case of the first portion (10) than the one of the related cone in the case of the second portion (11).

6.     Coupling device according to claim 2, characterised in that the eccentrically arranged driving pin (8) comprises two surface portions (13,15) opposite to each other, which are each constituted by at least one plane which is parallel to the radius and inclined with reference to the axis of the coupling device.

7.     Coupling device according to claim 6, characterised in that each of the two surface portions (13,15) is constituted by two planes (13,15) which are inclined to the axis with different angles.

8.     Coupling device according to claim 7, characterised in that the plane (15) adjacent to the front face (14) of the pin (8) is sharper inclined to the axis of the coupling device than the plane (13) adjacent to the coupling surface (9) of the coupling member.

9.     Coupling device according to claim 2, characterised in that the driving plate (6) is provided with a first, centrically arranged, circular opening (19) and a second, eccentrically arranged opening (2), which latter one comprises two edges (21) extending parallel to the radius.

10.     Coupling device according to the claims 1-5 and 9, characterised in that the diameter of the circular opening (19) is smaller than the base diameter of the centric pin (7), but greater than its diameter at the front face (12).

11.     Coupling device according to claim 10, characterised in that the diameter of the circular opening (19) has a value which is between the maximal and minimal diameter value of that truncated cone-shaped jacket portion of the centric driving pin which is adjacent to the coupling surface (9).

12.     Coupling device according to claims 1-2 and 6-9, characterised in that the distance between the two edges (21) of the eccentric opening (20) which extend parallel to the radius is smaller than the base width of the eccentric pin (8), but greater than the width thereof at the front face, both values taken perpendicularly to the radius.

13.     Coupling device according to claim 12, characterised in that the value of the edge distance is between the value of the base width and the value of the width of the pin (8) at the transition from the less inclined (13) to the more inclined (15) plane.

14.     Coupling device according to claim 2, characterised in that the second coupling member (3) is provided with an annular, concentric bead (17) protruding from the coupling surface (16), to the front face of which the driving plate (6) is torsionally fixed.

15.     Coupling device according to claim 1, characterised in that the driving plate (6) is provided with slots (24) positioned between the openings (19,20).

16.     Coupling device according to the claims 9 and 15, characterised in that there is provided a slot (24) extending perpendicularly to a line between the two openings (19,20) and being positioned between the centric and the eccentric opening (19,20).

## Revendications

1. Dispositif d'accouplement pour l'accouplement amovible et sans liberté de rotation relative d'une pièce à un dispositif d'usinage, comportant deux organes d'accouplement coaxiaux (1, 3) et un disque d'entraînement rigide dans la direction circonférentielle (6) inséré entre eux, l'un des organes d'accouplement (1) étant solidaire du dispositif d'usinage et étant pourvu d'au moins deux tenons d'entraînement (7, 8) portant de la face d'accouplement et la surface latérale de ces tenons d'entraînement (7, 8) étant au moins en partie conique, l'autre organe d'accouplement (3) portant la pièce et étant, lors d'un changement de pièce, détachable du premier organe d'accouplement en même temps que la pièce, des moyens (2, 5) étant prévus pour serrer en direction axiale l'un contre l'autre et de façon amovible les deux organes d'accouplement (1, 3), le disque d'entraînement (6) étant en outre un disque en acier à ressorts qui est relié sans liberté de rotation à l'autre organe d'accouplement (3) à une certaine distance de la face d'accouplement (16) de celui-ci et est pourvu d'ouvertures (19, 20) qui sont placées en correspondance avec les tenons d'entraînement (7, 8) et dont les bords (21) recouvrent au moins en partie les surfaces latérales coniques (10, 13) des tenons d'entraînement, de façon que le disque d'acier à ressorts (6) dans l'état serré du dispositif d'accouplement, soit déformé axialement élastiquement dans la région des ouvertures (19, 20), l'un (3) des deux organes d'accouplement (1, 3) étant pourvu de trois tétons d'écartement (22) faisant saillie de la face d'accouplement (16) dont la face frontale (23), lors de l'engagement de l'accouplement, s'appuie contre la face d'accouplement (9) de l'autre organe d'accouplement (1).

2. Dispositif d'accouplement selon la revendication 1, caractérisé en ce que le premier organe d'accouplement (1) est pourvu d'un tenon d'entraînement central (7) et d'un tenon d'entraînement excentrique (8).

3. Dispositif d'accouplement selon la revendication 2, caractérisé en ce que la surface extérieure (10, 11) du tenon d'entraînement central (7) a au moins en partie la forme d'une surface latérale de tronc de cône.

4. Dispositif d'accouplement selon la revendication 3, caractérisé en ce que la surface extérieure du tenon d'entraînement central (7) a dans une première partie, de base, (10) dirigée vers le premier organe d'accouplement (1) la forme d'une première surface latérale de tronc de cône et, dans une deuxième partie (11) dirigée vers sa face frontale (12), la forme d'une deuxième surface latérale de tronc de cône.

5. Dispositif d'accouplement selon la revendication 4, caractérisé en ce que l'angle d'ouverture du cône de la première partie (10) est plus petit que celui du cône de la deuxième partie (11).

6. Dispositif d'accouplement selon la revendication 2, caractérisé en ce que le tenon d'entraînement excentrique (8) a deux parties de surface opposées (13,15) qui sont formés chacune par au moins un plan parallèle au rayon et incliné par rapport à l'axe du dispositif d'accouplement.

7. Dispositif d'accouplement selon la revendication 6, caractérisé en ce que chacune des deux parties de surface (13, 15) est formée par deux plans (13 et 15) qui ont un angle d'inclinaison différent par rapport à l'axe du dispositif d'accouplement.

8. Dispositif d'accouplement selon la revendication 7, caractérisé en ce que le plan (15) dirigé vers la face frontale (14) du tenon (8) est plus incliné par rapport à l'axe du dispositif d'accouplement que le plan (13) dirigé vers la face d'accouplement (9) de l'organe d'accouplement (1).

9. Dispositif d'accouplement selon la revendication 2, caractérisé en ce que le disque d'entraînement (6) est pourvu d'une première ouverture (19) circulaire centrale et d'une deuxième ouverture (20) excentrée qui a deux bords (21) parallèles au rayon.

10. Dispositif d'accouplement selon les revendications 1 à 5 et 9, caractérisé en ce que le diamètre de l'ouverture circulaire (19) est inférieur au diamètre de base du tenon central (7) mais supérieur au diamètre de celui-ci à sa face frontale (12).

11. Dispositif d'accouplement selon la revendication 10, caractérisé en ce que le diamètre de l'ouverture circulaire (19) est compris entre le diamètre maximal et le diamètre minimal de la partie de surface latéral tronconique (10) du tenon d'entraînement central (7) dirigée vers la face d'accouplement (9).

12. Dispositif d'accouplement selon les revendications 1 et 2 et 6 à 9, caractérisé en ce que la distance des deux bords parallèles au rayon (21) de l'ouverture excentrique (20) est inférieure à la largeur de base du tenon excentrique (8) mais supérieure à la largeur de celui-ci à sa face frontale (14), ces largeurs étant mesurées perpendiculairement au rayon.

**13.** Dispositif d'accouplement selon la revendication 12, caractérisé en ce que la distance des bords est comprise entre la largeur de base et la largeur du tenon (8) à la jonction du plan le moins incliné (13) au plan le plus incliné (15).

**14.** Dispositif d'accouplement selon la revendication 2, caractérisé en ce que le deuxième organe d'accouplement (3) est pourvu d'un bourrelet annulaire concentrique (17) faisant saillie de la face d'accouplement (16) sur la face frontale duquel le disque d'entraînement (6) est monté sans liberté de rotation.

**15.** Dispositif d'accouplement selon la revendication 1, caractérisé en ce que le disque d'entraînement (6) est pourvu de fentes (24) situées entre les ouvertures (19, 20).

**16.** Dispositif d'accouplement selon les revendications 9 et 15, caractérisé en ce qu'entre l'ouverture centrale (19) et l'ouverture excentrique (20) est prévue une fente (24) perpendiculaire à la ligne joignant ces deux ouvertures (19, 20).

FIG. 5

FIG. 1

FIG. 3

FIG. 4

FIG.2

FIG. 6

FIG. 7

FIG. 8